# EUROPEAN PATENT SPECIFICATION

(11) **EP 2 278 087 B1**
(45) Date of publication and mention of the grant of the patent: **05.12.2012**
(21) Application number: 10160087.2
(22) Date of filing: 15.04.2010
(51) Int. Cl.: E04B 5/04, E04B 5/48, E04C 2/04, E04C 2/52, F24D 3/16, F24F 5/00

(54) **Demountable construction assembly and method for constructing a demountable construction assembly**
Demontierbare Konstruktionsanordnung und Verfahren zur Konstruktion einer demontierbaren Konstruktionsanordnung
Ensemble de construction amovible et procédé de construction d'un ensemble de construction amovible

(30) Priority: 20.07.2009 NL 2003245; 20.07.2009 NL 2003244
(43) Date of publication of application: 26.01.2011
(73) Proprietor: Bartels, Michael Jacobus Gerhardus, 7631 BC Ootmarsum (NL)
(72) Inventor: Bartels, Michael Jacobus Gerhardus, 7631 BC Ootmarsum (NL)
(74) Representative: Verdijck, Gerardus

(56) References cited:
- EP-A1- 1 790 789
- WO-A1-2008/133516
- DE-A1- 10 214 967
- DE-A1- 19 826 921
- US-B1- 6 226 942

## Description

The present invention relates to a demountable construction assembly comprising a floor element. Such floor elements can be combined to form a floor.

Conventional floor elements are known for use in the construction of buildings, such as houses and offices. These floor elements can be pre-fabricated and are placed on or against another structural element, such as a wall and portal frame.

Also, by positioning several floor elements adjacent or close to each other a floor is achieved. An even surface is created by covering the floor elements, for example by pouring concrete to form a concrete layer. The covering layer gives structural strength to the floor and provides a finishing layer.

A disadvantage of conventional floor elements is that the floor elements, once incorporated in a construction, form an integral part of such construction. If the construction is dissembled, the floor elements will be destroyed. Although floor elements can have a lifetime of over several hundreds of years, in practice they are used for typically only 35 years, often corresponding to the lifetime of the building in which it is placed. This is a very uneconomic and wasteful usage of floor elements.

EP 1790789 A1 of the same inventor discloses a demountable construction assembly according to the preamble of claim 1 comprising a beam element with a hollow space extending inside the beam for arranging lines therein. The hollow spaces are accessible via openings in the beam elements for fitting or removing the lines.

DE 10214967 A1 discloses a floor element comprising two concrete slabs which are arranged on a distance from each other. The floor element has reinforcements which can be used as heat exchange tubes.

DE 19826921 A1 discloses a wall element comprising concrete outer and inner slabs which are held together by a lattice girder. The element comprises heating and cooling elements.

The object of the present invention is to overcome or reduce these disadvantages and to provide a demountable construction assembly which is effective and efficient.

This object is achieved with the detachable floor element, the floor element comprising:
- an upper plate;
- a lower plate in substantially parallel relationship to the upper plate;
- a load bearing structure connected with the upper plate and the lower plate and providing a distance between said plates;
- first coupling means for coupling the floor element to a second floor element; and
- a contact surface for placing the floor element on structural elements having a mating supporting surface,
wherein the first coupling means are releasable.

By providing two plates at a distance of each other, a space is created in which conduits can be fitted. The load bearing structure provides the distance between the plates and increases the strength of the construction. For example, the load bearing structure comprises a truss or a lattice work.

Preferably, the load bearing structure comprises metal, such as steel or aluminium. By providing a metal load bearing structure, the floor element has a large constructive strength. Preferably, the load bearing structure comprises a truss comprising a first and second metal beam with metal bars between said beams, wherein each pair of successive bars forms a triangle with one of the metal beams. In other words, metal bars are constructed in a zig-zag pattern between the beams.

By providing first coupling means for coupling the floor element to a second floor element, several floor elements can be combined into a floor. The first coupling means are releasable. In other words: they can be decoupled, i.e. detached. This enables re-use of the elements or separate disposal of the elements.

Preferably, the floor elements are placed adjacent to each other.

Preferably, the first coupling means can comprise so-called dry coupling means, such as a bolt and nut, a weld which is accessible after construction so it can be cut to decouple the floor elements. This makes the coupling of floor elements easier and a so-called wet coupling, like pouring a concrete finishing layer, is not required. Furthermore, dry coupling means require less additional tools and are less messy.

A further advantage of the first coupling means is that they allow the construction of a continuous floor. This ensures the diaphragm action of the resulting floor, such that the loads are distributed. This provides structural strength to the constructed floor.

By providing the contact surface, the floor element can be coupled to other structural elements, such as a wall, a portal frame or a supporting beam or column. Preferably such a structural element comprises a corresponding supporting surface, such as a profile or rabbet.

By providing the coupling between the floor element and other structural elements as a contact surface resting on a corresponding supporting surface of one or more structural elements, this coupling is also releasable. Therefore, the floor elements are detachable from the other structural elements. Furthermore, further advantages as described for the first coupling means may be achieved.

Optionally, additional coupling means are provided, such as a bolt and a nut or a weld which is accessible so it can be cut.

A further advantage of the floor elements is that any conduits and/or cables installed in a floor comprising these floor elements are easy to access, also after construction.

Furthermore, no suspending ceiling is required for installation of conduits and/or cables. Also air treatment units or other appliances can be accommodated in the space between the two plates. Installation can therefore proceed even with bad weather, such as rain and frost.

Furthermore, conduits, cables, installations etc. can extend through the floor element and connect different parts of a construction without requiring holes in a wall, thus ensuring that the strength of the construction is maintained.

It is noted that it is possible to permanently attach the floor elements to each other or to other constructional elements, for instance by using additional coupling means.

In a preferred embodiment of the present invention the upper plate and/or lower plate comprise concrete.

Preferably, both plates comprise concrete.

Preferably, when a plate comprises concrete, it also comprises reinforcing metal. By providing reinforced concrete, the floor element is able to span a large distance. Due to its strength, constructions, such as buildings, up to at least 15 floors can be constructed.

In a preferred embodiment of the present invention, the width or length of one of the plates is larger than the respective width or length of the other plate.

By providing one of the plates with a larger width than the other, the space between the plates is accessible from either above or below. When a number of floor elements according to the present invention are placed adjacent to each other, an opening remains from which the space between the plates can be accessed. This opening can be closed by placing covering panels. For example, by providing several floor elements adjacent to each other, all having the lower plate with a larger width than the upper plate, openings extending in the longitudinal direction remain at the upper side of the floor. From these openings, the space between the upper and lower plate can be accessed.

Preferably, the plate of smaller width or length comprises a profile for accepting a covering panel. When several floor elements are positioned adjacent or close to each other, the access opening which remains between the plates of smaller width or length can be covered by covering panels. By providing a profile for accepting a covering panel, a floor formed by several adjacent floor elements and several covering panels forms a substantially even surface. A profile can for example comprise a ledge or rails.

Preferably, the profile is dimensioned such that a floor comprising floor elements according to the invention and covering panels form an even surface.

In a preferred embodiment of the present invention, the load bearing structure is formed by reinforcing metal bars extending from the upper plate and/or lower plate.

When the upper and/or lower plates comprise reinforcing metal bars, the load bearing structure and the reinforcing metal bars can be integrated into a unitary metal frame. A part of this frame will reside in the upper plate and/or lower plate, forming the reinforcement, and another part of this frame will form the load bearing structure. By providing the load bearing structure and the reinforcing metal bars as a single component, the production process is efficient. Furthermore, this provides additional strength to the floor elements, while requiring less material.

In a preferred embodiment of the present invention, the floor element comprises a hoisting eye.

By providing a hoisting eye, the detachable floor element can be lifted conveniently. Furthermore, the floor element can be positioned accurately. Preferably, the hoisting eye is positioned in the space between the two plates. The hoisting eye can remain attached to the floor element, since it will be hidden from view when covering panels are positioned between floor elements. When the construction is dismantled, the hoisting eye can be used again for lifting the floor elements.

Providing a hoisting eye is in particular advantageous in combination with a floor element according to the invention having a lower plate of larger width than the width of the upper plate. Preferably, the hoisting eye is located at the edges of the lower plate, such that they can be conveniently accessed from above.

In a preferred embodiment of the present invention, the first coupling means comprise a metal profile in the upper and/or lower plates, connectable to a corresponding metal profile of the second floor element.

The metal profiles of adjacent floor elements can be connected to each other using a nut and bolt or by means of welding, for example.

Preferably, the metal profile comprises an angle steel.

For example, a steel profile is arranged at a side of the floor element. The profile has an L-shaped cross-section and is partly integrated in the upper plate or lower plate. The L-shaped profile is positioned with a top surface extending substantially parallel to the horizontal surface of the plate. A vertical bolt is arranged extending through this surface of the profile. A metal plate can be placed over the two adjacent profiles of two adjacent floor elements. The coupling is completed by tightening a nut, thereby fastening the metal plate to the profiles. Alternatively, the profiles are welded together.

In a further preferred embodiment the detachable floor element comprises a heating element or a cooling element.

By providing a heating element or a cooling element, a construction, such as a building, comprising floor elements according to the present invention can be efficiently and effectively cooled or heated.

In a preferred embodiment of the present invention the detachable floor element comprises a heating element and a cooling element with an insulating layer in between.

Preferably, the heating element is positioned near the upper plate and/or the cooling element is positioned near the lower plate. For example, the heating element abuts against the upper plate and the cooling element abuts against the lower plate.

Since warm air rises and cold air falls, providing the heating element near the upper plate and the lower plate near the lower plate is effective and efficient. To prevent the heating and/or cooling element from working against each other, an insulating layer is provided. This ensures an efficient cooling and/or heating.

In a further preferred embodiment of the present invention, the heating element is integrated in the upper plate, and/or the cooling element is integrated in the lower plate.

By providing the heating element in the upper plate and/or the cooling element in the lower plate, the beneficial effects of concrete core activation can be obtained. Concrete has a relatively large specific heat, which means that the concrete can store heat effectively. The concrete tends to remain cold when it is cold and tends to remain warm when it is warm. When integrating the heating and/or cooling element in the corresponding plate, an effective heating and cooling of the floor element is obtained.

In a further preferred embodiment of the present invention, the heating and/or cooling elements comprise fluid channels for a heat transfer medium, the fluid channel being provided with fluid channel coupling means.

By providing detachable floor elements and heating and/or cooling elements with fluid channels, the floor elements and the heating and/or cooling elements can be re-used or easily separated after use.

Each floor element has its own fluid channel or fluid channels for a heat transfer medium. These individual fluid channels can be coupled when the floor elements are coupled to form a floor. The thus created floor has fluid channels extending below or above its surface.

Alternatively, the fluid channel coupling means are each connected to a central control system. This allows controlling the temperature of each floor element separately. In other words, the temperature can be controlled per floor element. For example, in a house comprising the floor elements according to the invention, only the floors in a selected number of rooms are heated using the heating element in the upper plate. Such a heating and cooling system is energy efficient and cost effective.

Optionally, a floor element comprises several closed fluid channel circuits, each covering a part of the floor element, to control the heating and cooling even more locally.

For example, groundwater can be used as a heat transfer fluid for cooling or heating the floor element.

The features of the described embodiments according to the present invention can all be combined as desired.

Furthermore, the features concerning the heating or cooling elements can also be realized in other floor elements than those described in this description.

The same effects and advantages apply in respect to such a floor as those described with respect to the floor element.

In a preferred embodiment of the present invention, the demountable floor comprises at least two floor elements as described above and at least one covering panel, wherein the floor elements are coupled using the first coupling means and the at least one covering panel is positioned between the at least two floor elements. Preferably, the floor elements and covering panel form an even surface.

Preferably, the covering panels comprise a fire proof material, such as gypsum.

The detachable structural element comprises:
- a vertical support structure;
- a supporting surface for supporting said floor element; and
- second coupling means for coupling to adjacent structural elements.

The same effects and advantages apply in respect to such a structural element as those described in respect to the floor and floor element.

The vertical support structure can for example be a wall, a column or a portal frame. The adjacent structural elements can for example be detachable structural elements or other structural elements such as foundation or ground.

In a further preferred embodiment of the present invention, the second coupling means comprise a pressure distributing plate which comprises a high density plastic. For example, the high density plastic comprises high density polyethylene (HDPE).

By providing a pressure distributing plate, the detachable structural element can be stacked on top of adjacent structural elements or vice versa. The pressure distributing plate prevents a concentration of force or loads at a single point and distributes the load or force over its area.

Preferably, the second coupling means can comprise a dowel and a hole. For example, a vertical column is provided which can be coupled to a foundation block using the second coupling means. The bottom of the column comprises a dowel and the foundation block comprises a hole. The dowel and hole coupling allows an accurate positioning of the structural elements with respect to each other.

The structural element has such a shape, that when it is coupled to an equivalent structural element a space is defined between the two vertical support structures.

By providing a space enclosed by the two structural elements, conduits can be accommodated inside this space. For example, the portal frame comprises two columns connected by an upper bar and the two columns have a cross section which is L-shaped. When two portal frames are placed adjacent to each other at an angle in the horizontal plane of substantially 90 degrees, the L-shaped columns will enclose a rectangular space. When two portal frames are placed adjacent to each other at an angle in the horizontal plane of substantially 180 degrees, the L-shaped columns will form a half open space which can be closed by placing a cover, for instance a gypsum plate.

The invention relates to a demountable construction assembly comprising a floor element and/or a floor and/or structural element as described above. The construction may be a building, such as an office, shop or house. For example, also a double-layered highway is possible.

Such an assembly provides the same effects and advantages apply as those described in respect to the detachable structural elements, the demountable floor and the detachable floor element.

By providing a demountable construction assembly according to the present invention, the construction can be decomposed in its elements, such as the detachable floor element and/or the detachable structural elements. After dismantling the demountable construction assembly, a new construction can be built using the detachable floor elements and/or detachable structural elements. The system comprising floor elements and other elements is entirely cradle to cradle. Furthermore, construction and dismantling the assembly requires relatively little time. Also, minimum storage area for building materials is required on the construction site.

The invention further relates to a method for constructing a demountable construction assembly, for which the same effects and advantages apply as those described above for the floor element, the floor, the structural element and the construction assembly.

In a preferred embodiment of the method according to the present invention, the method comprises the steps of:
- providing detachable floor elements and detachable structural elements as described above;
- placing the floor elements on the structural elements such that the contact surface of each floor element rests on the supporting surface of at least one structural elements; and
- coupling the floor elements using the first coupling means; and

For example, an office building is constructed using the method according to the present invention. First, structural elements in the form of concrete foundation blocks are placed. Next, the second coupling means of the concrete foundation blocks are coupled with the ground or foundation. On top of the foundation blocks structural elements according to the present invention in the form of portal frames are placed. The portal frames are coupled to the foundation blocks using a dowel and hole coupling. A high density plastic plate is positioned in between as force distributing plate. A central column is provided and coupled to the foundation blocks. Between the portal frames and the central column floor elements according to the present invention are positioned. A similar procedure is followed for subsequent floors and the building is completed. Any conduits which need to be installed can be placed in the space in the floor using the openings between the upper plate or lower plate of neighbouring floor elements. These openings can then be covered by covering panels.

The office building can be demounted by decoupling the first and second coupling means of the floor elements and the portal frames and central column and removing them from the building. The elements can be re-used for constructing a new construction.

Preferably, all elements have standardized dimensions. This simplifies reusing the elements and allows for a quick and accurate calculation of costs. Furthermore, this makes it relatively easy to add new elements to an existing construction. The design of a construction assembly to be constructed can be done using software for so-called virtual building. The software comprises virtual copies of the standardized elements, which can be combined to design a construction assembly according to the invention. Quick overviews of the costs and required material amounts are provided by the software.

Any combination of the features as described in the above preferred embodiments is possible according to the invention.

Further advantages, features and details of the invention are elucidated on the basis of preferred embodiments thereof, wherein reference is made to the accompanying drawings.
Figure 1 shows a side view in cross-section of a floor comprising floor elements .
Figure 2 shows a side view in cross-section of a floor comprising floor elements.
Figure 3A shows a floor with a stairwell opening, comprising floor elements, a trimmer and a trimming floor element.
Figure 3B-C show cross-sectional views of the floor of figure 3A from line Q-Q and line P-P, in the direction of the arrows.
Figure 4 shows a three-dimensional view of a floor comprising two floor elements comprising fluid channels for heating and cooling.
Figure 5 shows the floor of figure 4 in cross-section and with covering panels positioned between the floor elements.
Figure 6 shows a three-dimensional view of a part of a first building comprising floor elements and structural elements according to the invention.
Figure 7 shows a three-dimensional view of a carcass of a second building comprising floor elements and structural elements according to the invention.
Figure 8 shows portal frames according to the invention in cross-sectional view.
Figure 9 shows a three-dimensional view of the connection between two supporting columns according to the invention.
Figure 10 shows a three-dimensional view of a double-layered highway comprising floor elements and structural elements according to the present invention.

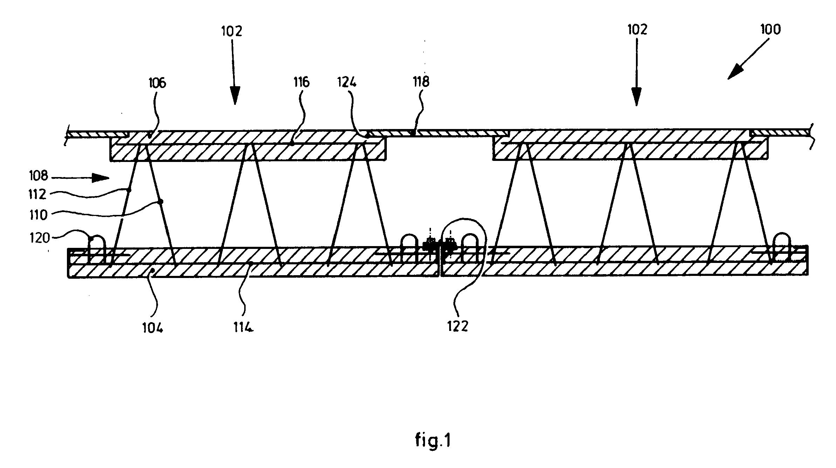

Floor 100 comprises two floor elements 102 according to a first embodiment of the invention (figure 1). The floor elements comprise a lower concrete slab 104 and an upper concrete slab 106, held on a distance from each other by truss 108. The concrete slabs 104, 106 are reinforced by metal beams 114, 116. The truss 108 comprises metal bars 110, 112 which are connected to reinforcing beams 114, 116 and partly incorporated in the concrete of slabs 102, 104. The bars 110, 112 form a roughly triangular shape with the metal beams 114, 116 to provide load bearing strength.

Since the upper slabs 106 are smaller in width than the lower slabs 104, an opening remains between two adjacent floor elements 102. This opening is covered by calcium sulphate panels 118. The upper concrete slab 106 of the floor elements 102 comprise a profile 124 for receiving a covering panel such as calcium sulphate panel 118. The covering panels 118 form an even upper surface with the floor elements 102.

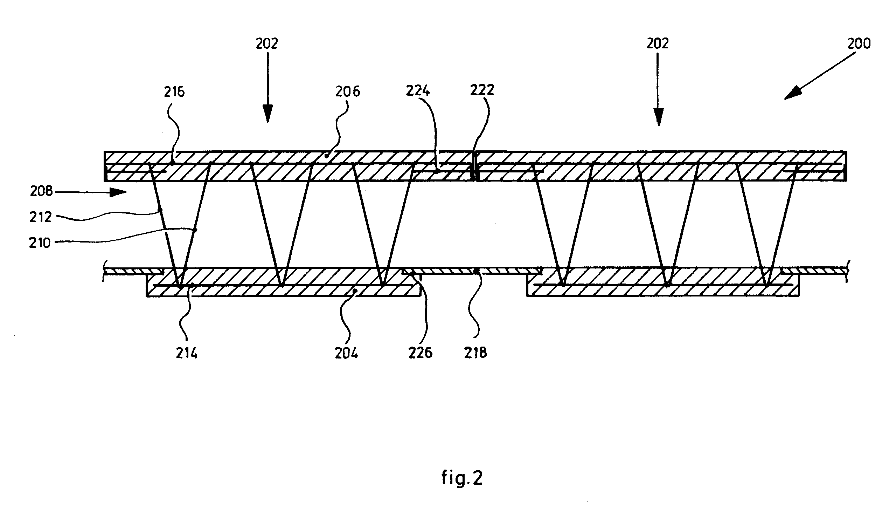

In an alternative embodiment, the space between two concrete slabs 204, 206 can be accessed from below (figure 2). In this embodiment, the lower concrete slabs 204 of the floor elements 202 have a smaller width than the upper concrete slab 206. Therefore, openings remain on the bottom of a floor 200 consisting of floor elements 202 according to this embodiment. Again, covering panels 218 can fitted in profiles 226 of the floor elements 200, to close these openings.

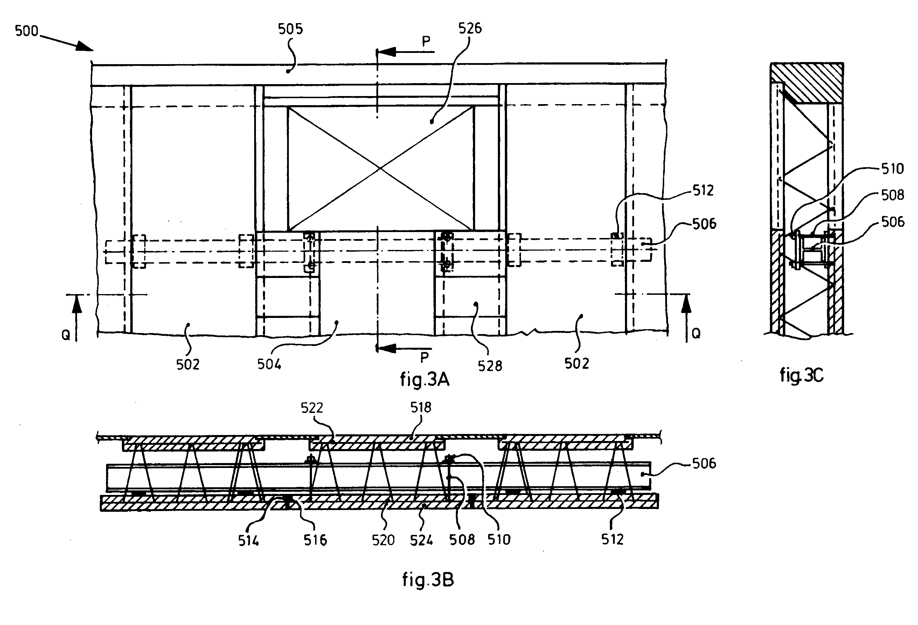

An embodiment of a floor 500 comprising a stairwell opening 526 is shown in figure 3A. The floor 500 comprises two floor elements 502 similar to the first embodiment described above (figures 3A-C). A third floor element 504 has a shorter length than floor elements 502 and is placed in between the other two floor elements 502. Due to its shorter length, floor element 504 is not supported by wall 505. Therefore a trimmer beam 506 is required to support floor element 504. Trimmer beam 506 consists of a metal I-beam. The trimmer beam 506 is connected to the floor element by metal bars 508 and nuts 510. The metal bars 508 comprise a thread for receiving nuts 510. A lower portion of metal bars 508 are embedded in lower plate 520 of floor element 504. The trimmer beam 506 rests on supports 512 to distribute the force exerted by the middle floor element 504 over the two other floor elements 502.

The three floor elements 502, 504 are connected using metal edge profiles 514, 516 which are spot welded together. The openings between adjacent floor elements are covered by gypsum panels 528.

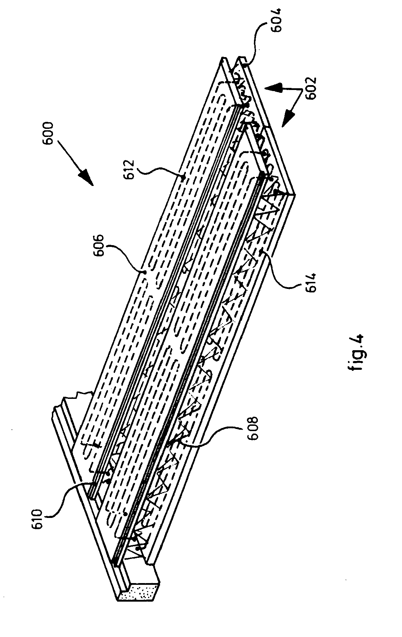

A floor element 602 comprises heating element 612 and cooling elements 614 (figure 4). Fluid channels 612 are intended for use with a heating fluid. The fluid channels 612 are embedded in the upper concrete plate 606. Fluid channels 614 are intended for use with a cooling fluid and are embedded in lower concrete plate 604.

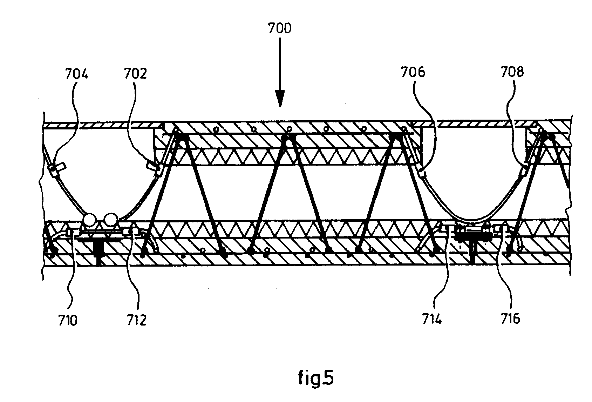

The fluid channels of adjacent floor elements can be coupled using fluid channel coupling 702, 704, 706, 708, 710, 712, 714, 716 (figure 5).

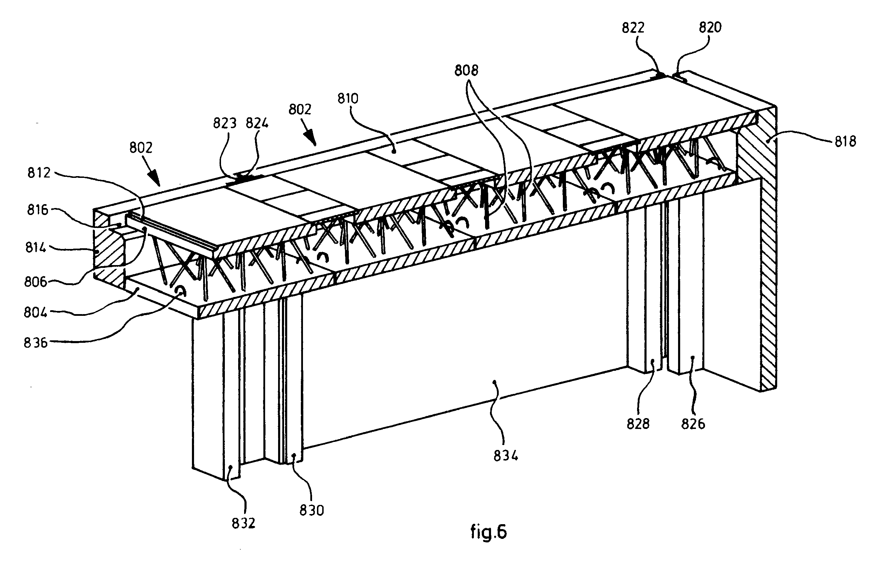

A floor is placed on a series of portal frames 814, 818, 834 (figure 6). The leftmost portal frame 814 is connected to the middle portal frame 834 by welding metal coupling plates 823, 824 together. The middle portal frame 834 is coupled to the rightmost portal frame 818 by welding metal plates 822, 820 together using an additional metal profile (not shown). The portal frames comprise a profile 816 for receiving and supporting the upper plates 806 of the floor elements 802.

The portal frames further comprise a vertical beam 830, 832, 828, 826 near its edge region. In other words, the cross-section of the edge region is L-shaped. The portal frames 814, 834 are positioned under an angle of 180 degrees with respect to each other and the vertical beams 830, 832 define a vertical space which can be used to fit conduits, cables and such. The portal frames 834, 818 are positioned under an angle of 90 degrees with respect to each other and the vertical beams 826, 828 define enclosed vertical space for conduits, cables and such.

The floor elements 802 provide hoisting eyes 836 for lifting the floor elements 802 during construction or deconstruction. The hoisting eyes 836 are provided in the space between upper slab 806 and lower slab 804 and are therefore hidden from view once the covering panels 806 are installed.

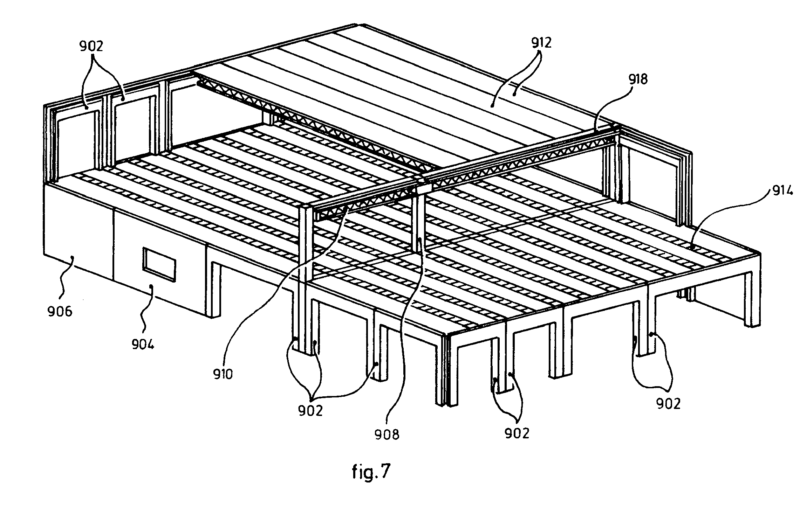

The components can be combined to form a building, such as a house, office or warehouse. Figure 7 shows a partly completed carcass 900 of a building. The carcass 900 comprises portal frames 902, wall sections 904, 906, columns 908, supporting beam 910 and floor elements 912. The portal frames 902 and the wall sections 904, 906 are positioned and coupled to foundation elements (not shown). They support the first floor, wherein the opening between adjacent floor elements are covered by panels 914. Several portal frames 902 and columns 908 are placed on the structural elements of the first layer. They provide a supporting structure for a second layer of floor elements. The columns 908 also support a beam 910, which can be described as a heavy-duty elongated version of the floor elements 912. The beam 910 comprises a profile 918 for receiving and supporting floor elements 912.

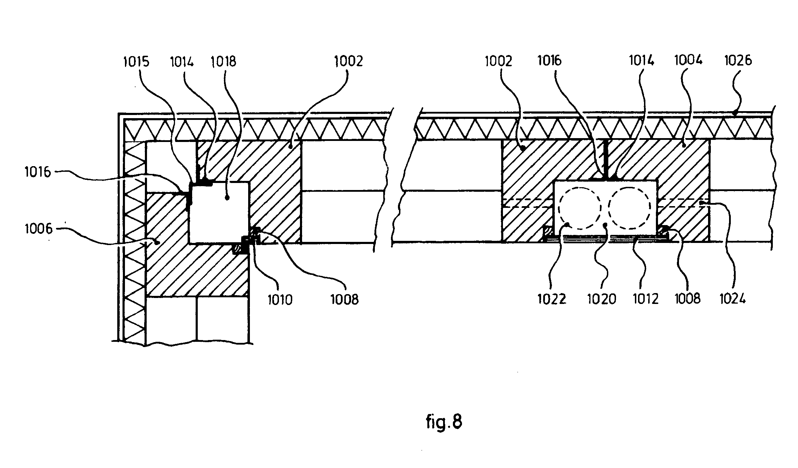

A portal frame comprises an L-shaped cross-section in its edge region (figure 8). The portal frames 1002, 1004, 1006 are identical. They comprise a lath 1008 and metal profile 1014 on their left side and a lath 1008 and metal profile 1016 on their right side.

The portal frame 1002 is coupled with portal frame 1004 under an angle of 180 degrees. The metal profiles 1014 and 1016 are welded together. Due to the L-shaped cross-section of the edge region, the coupled portal frames 1002, 1004 define a space 1020 for fitting conduits 1022. Additional access to this space is provided by feedthrough channels 1024. The space 1020 is close by placing gypsum panel 1012. The panel is attached to the portal frames 1002, 1004 by screwing it against laths 1008.

The portal frame 1002 is coupled to portal frame 1006 under an angle of 90 degrees. An additional L-shaped metal profile 1015 is used to weld the coupling plates 1014, 1016 of portal frame 1002 and portal frame 1006. An L-shaped profile 1010 is positioned between laths 1008 and fastened. The portal frames 1002, 1006 define a space 1018 wherein conduits, cables and such can be fitted.

The exterior of the portal frames is provided with a curtain wall 1026.

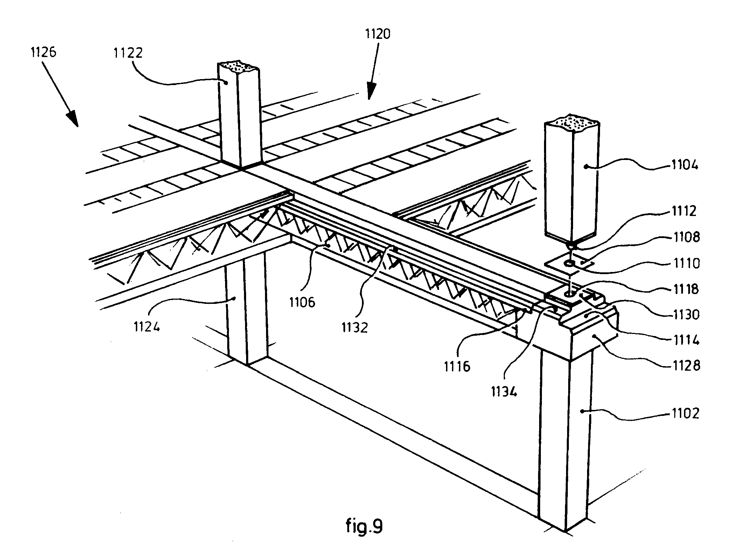

Two columns 1102, 1104 are connected (figure 9). Column head 1128 of supporting column 1102 comprises a hole 1118 in its upper surface 1130. A second column 1104 comprises a dowel 1112 which mates with hole 1118. A load distributing high density polyethylene plate 1108 comprising hole 1110 is positioned between column 1104 and column 1104. Dowel 1112 goes through hole 1110 and hole 1118.

The column 1102 comprises supporting surfaces 1114 and 1116 for receiving a support beam according to the present invention, such as beam 1106. The support beam comprises a supporting surface 1132 which aligns with a corresponding supporting surface 1134 of column 1102. The supporting surfaces 1132, 1134 are provided to receive and support floor elements to form a floor, such as floor 1120.

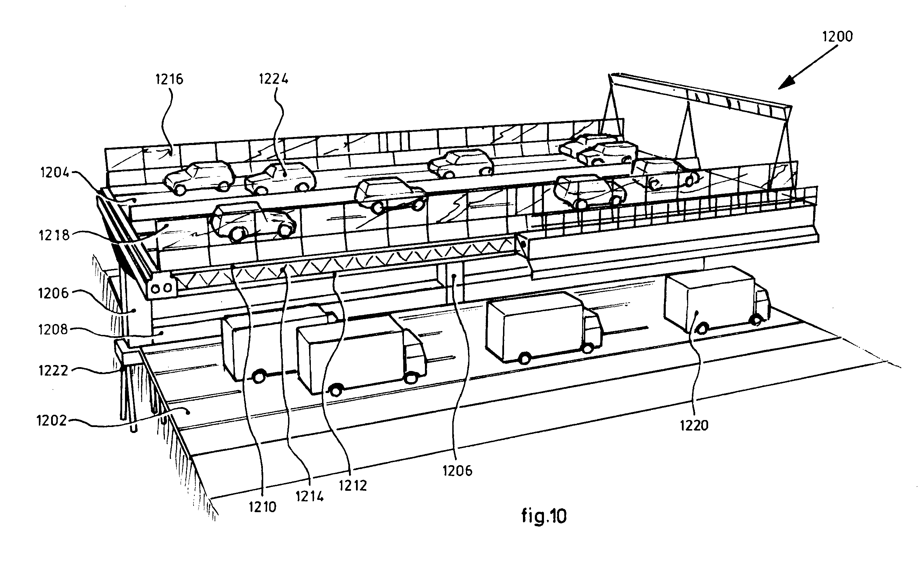

The elements can be used to construct buildings, but also to construct, for example, a double-layered highway 1200 (figure 10). The double-layered highway 1200 comprises two road surfaces 1202, 1204 for traffic. The lower surface 1202 is positioned on foundation 1222.

Supporting columns 1206 and beams 1208 are also positioned on the foundation 1204. The columns 1206 support a floor element according to the invention, which comprises an upper plate 1210, forming the upper road surface 1204 and a lower plate 1212. Between the plates 1210, 1212 a truss 1214 is provided.

The upper road surface 1204 is bounded by wall elements 1216, 1218. The double-layered highway is used by cars 1224 and trucks 1220.

The present invention is limited to the scope of the claims. Many modification can be envisaged. For example, the covering panels can comprise wood or plastic instead of gypsum.

## Claims

1. Demountable construction assembly comprising a detachable floor element, the floor element comprising:
- an upper plate (106; 206);
- a lower plate (104; 204) in substantially parallel relationship to the upper plate;
- a load bearing structure (108; 208) connected with the upper plate and the lower plate and providing a distance between said plates;
- first coupling means (122; 222) for coupling the floor element to a second floor element; and
- a contact surface for placing the floor element on structural elements (902, 904, 906) having a mating supporting surface,
wherein the first coupling means are releasable,
the construction assembly further comprising a detachable structural element (902, 904, 906) for supporting the floor element, the structural element comprising:
- a vertical support structure;
- a supporting surface for supporting said floor element; and
- second coupling means (1112, 1108, 1118) for coupling to adjacent structural elements, **characterised in that** the vertical support structure has such a shape, that when the structural element is coupled to an equivalent structural element a vertical space is defined between the two vertical support structures.

2. Demountable construction assembly according to claim 1, the floor element further comprising a heating element (612) or a cooling element (614) or a heating and cooling element with an insulating layer in between, wherein the heating element is positioned near or integrated in the upper plate and/or the cooling element is positioned near or integrated in the lower plate.

3. Demountable construction assembly according to claim 2, wherein the heating and/or cooling element comprises a fluid channel for a heat transfer medium, the fluid channel being provided with fluid channel coupling means (702, 704, 706, 708, 710, 712, 714, 716).

4. Demountable construction assembly according to claim 1, 2 or 3, wherein the upper place and/or lower plate comprises concrete.

5. Demountable construction assembly according to one or more of the claims 1-4, wherein the width or length of one of the plates is larger than the respective width or length of the other plate.

6. Demountable construction assembly according to one or more of the claims 1-5, wherein the load bearing structure is formed by reinforcing metal bars (114, 116; 214, 216) extending from the upper plate and/or lower plate.

7. Demountable construction assembly according to one or more of the claims 1-6, wherein the floor element comprises a hoisting eye (836).

8. Demountable construction assembly according to one or more of the claims 1-7, wherein the first coupling means comprise a metal profile in the upper plate and/or lower plate, connectable to a corresponding metal profile of the second floor element.

9. Demountable construction assembly according to one or more of the claims 1-8, comprising a trimmer beam (506) between the upper and lower plate.

10. Demountable construction assembly according to one or more of the claims 1-9, comprising a profile (918) for receiving and supporting floor elements (912).

11. Demountable construction assembly according to one or more of the claims 1-10, comprising at least two floor elements and at least one covering panel (118; 218), wherein the floor elements are coupled using the first coupling means and the at least one covering panel is positioned between the two floor elements.

12. Demountable construction assembly according to one or more of the claims 1-11, wherein the second coupling means comprise a pressure distributing plate (1118) which comprises a high density plastic.

13. Demountable construction assembly according to one or more of the claims 1-12, wherein the second coupling means of the detachable structural element comprise a dowel and a hole.

14. Demountable construction assembly according to one or more of the claims 1-13, wherein the detachable structural element is a portal frame (902; 816, 818, 834) comprising two columns (1002) having an L-shaped cross-section and connected by an upper bar.

15. Method for constructing a demountable construction assembly according to one or more of the claims 1-14, comprising the steps of:
- providing the detachable floor element and the detachable structural element;
- placing the floor elements on the structural elements such that the contact surface of the ach floor element rests on the supporting surface of at least one structural element; and
- coupling the floor elements using the first coupling means.

## Patentansprüche

1. Demontierbare Konstruktionsgruppe, die ein abtrennbares Geschossdeckenelement umfasst, wobei das Geschossdeckenelement Folgendes umfasst:
- eine obere Platte (106; 206);
- eine untere Platte (104; 204), die relativ zur oberen Platte in einer im Wesentlichen parallelen Anordnung steht;
- eine Last aufnehmende Struktur (108; 208), die mit der oberen Platte und der unteren Platte verbunden ist und die zwischen den Platten einen Abstand herstellt;
- ein erstes Verbindungsmittel (122; 222) zum Verbinden des Geschossdeckenelements mit einem zweiten Geschossdeckenelement; und
- eine Kontaktfläche, um das Geschossdeckenelement auf Bauelementen (902, 904, 906), die eine passend zugehörige tragende Fläche haben, platzieren zu können,
wobei das erste Verbindungsmittel geöffnet werden kann,
und wobei die Konstruktionsgruppe außerdem ein abtrennbares Bauelement (902, 904, 906) zum Tragen des Geschossdeckenelements umfasst, wobei das Bauelement Folgendes umfasst:
- eine senkrechte Trägerstruktur;
- eine tragende Fläche zum Tragen des Geschossdeckenelements; und
- ein zweites Verbindungsmittel (1112, 1108, 1118) zum Verbinden mit benachbarten Bauelementen,
**dadurch gekennzeichnet, dass**
die senkrechte Trägerstruktur eine solche Form hat, dass wenn das Bauelement mit einem entsprechenden Bauelement verbunden ist, zwischen den beiden senkrechten Trägerstrukturen ein senkrechter Raum definiert ist.

2. Demontierbare Konstruktionsgruppe nach Anspruch 1, wobei das Geschossdeckenelement außerdem ein Heizungselement (612) oder ein Kühlungselement (614) oder ein Heizungs- und Kühlungselement mit einer isolierenden Schicht dazwischen umfasst, wobei das Heizungselement in der Nähe der oberen Platte positioniert oder in diese integriert ist und/oder das Kühlungselement in der Nähe der unteren Platte positioniert oder in diese integriert ist.

3. Demontierbare Konstruktionsgruppe nach Anspruch 2, wobei das Heizungs- und/oder Kühlungselement einen Fluidkanal für ein Wärmetransportmedium umfasst und wobei der Fluidkanal mit einem Fluidkanal-Verbindungsmittel (702, 704, 706, 708, 710, 712, 714, 716) ausgestattet ist.

4. Demontierbare Konstruktionsgruppe nach Anspruch 1, 2 oder 3, wobei die obere Platte und/oder die untere Platte Beton enthalten.

5. Demontierbare Konstruktionsgruppe nach einem oder mehreren der Ansprüche 1 bis 4, wobei die Breite oder Länge einer der Platten größer ist als die entsprechende Breite oder Länge der anderen Platte.

6. Demontierbare Konstruktionsgruppe nach einem oder mehreren der Ansprüche 1 bis 5, wobei die Last aufnehmende Struktur durch Armierungsmetallstäbe (114, 116; 214, 216) gebildet wird, die sich ausgehend von der oberen Platte und/oder der unteren Platte erstrecken.

7. Demontierbare Konstruktionsgruppe nach einem oder mehreren der Ansprüche 1 bis 6, wobei das Geschossdeckenelement eine Hebeöse (836) umfasst.

8. Demontierbare Konstruktionsgruppe nach einem oder mehreren der Ansprüche 1 bis 7, wobei das erste Verbindungsmittel ein Metallprofil in der oberen Platte und/oder der unteren Platte umfasst, das mit einem zugehörigen Metallprofil des zweiten Geschossdeckenelements verbunden werden kann.

9. Demontierbare Konstruktionsgruppe nach einem oder mehreren der Ansprüche 1 bis 8, die zwischen der oberen und unteren Platte einen Wechselbalken (506) umfasst.

10. Demontierbare Konstruktionsgruppe nach einem oder mehreren der Ansprüche 1 bis 9, die ein Profil (918) zur Aufnahme und zum Tragen von Geschossdeckenelementen (912) umfasst.

11. Demontierbare Konstruktionsgruppe nach einem oder mehreren der Ansprüche 1 bis 10, die wenigstens zwei Geschossdeckenelemente und wenigstens eine Abdeckplatte (118; 218) umfasst, wobei die Geschossdeckenelemente unter Verwendung des ersten Verbindungsmittels verbunden sind und die wenigstens eine Abdeckplatte zwischen den beiden Geschossdeckenelementen positioniert ist.

12. Demontierbare Konstruktionsgruppe nach einem oder mehreren der Ansprüche 1 bis 11, wobei das zweite Verbindungsmittel eine Druck verteilende Platte (1118) umfasst, die einen Kunststoff hoher Dichte umfasst.

13. Demontierbare Konstruktionsgruppe nach einem oder mehreren der Ansprüche 1 bis 12, wobei das zweite Verbindungsmittel des abtrennbaren Bauelements einen Dübel und ein Loch umfasst.

14. Demontierbare Konstruktionsgruppe nach einem oder mehreren der Ansprüche 1 bis 13, wobei das abtrennbare Bauelement ein Portalrahmen (902; 816, 818, 834) ist, der zwei Säulen (1002) umfasst, die einen L-förmigen Querschnitt haben und die durch einen oberen Balken verbunden sind.

15. Verfahren zum Errichten einer demontierbaren Konstruktionsgruppe nach einem oder mehreren der Ansprüche 1 bis 14, das die folgenden Schritte umfasst:
- Bereitstellen des abtrennbaren Geschossdeckenelements und des abtrennbaren Bauelements;
- Platzieren der Geschossdeckenelemente auf den Bauelementen, und dies derart, dass die Kontaktfläche jedes der Geschossdeckenelemente auf der tragenden Fläche wenigstens eines Bauelements ruht; und
- Verbinden der Geschossdeckenelemente unter Verwendung der ersten Verbindungsmittel.

## Revendications

1. Ensemble de construction amovible comprenant un élément de plancher détachable, l'élément de plancher comprenant :
une plaque supérieure (106 ; 206) ;
une plaque inférieure (104 ; 204) en relation sensiblement parallèle par rapport à la plaque supérieure ;
une structure porteuse (108 ; 208) raccordée à la plaque supérieure et à la plaque inférieure et fournissant une distance entre lesdites plaques ;
des premiers moyens de couplage (122 ; 222) pour coupler l'élément de plancher à un second élément de plancher ; et
une surface de contact pour placer l'élément de plancher sur les éléments structurels (902, 904, 906) ayant une surface de support de jointement,
dans lequel les premiers moyens de couplage sont libérables,
l'ensemble de construction comprenant en outre un élément structurel détachable (902, 904, 906) pour supporter l'élément de plancher, l'élément structurel comprenant :
une structure de support verticale ;
une surface de support pour supporter ledit élément de plancher ; et
des seconds moyens de couplage (1112, 1108, 1118) pour se coupler avec les éléments structurels adjacents, **caractérisé en ce que** :
la structure de support verticale a une forme telle que lorsque l'élément structurel est couplé à un élément structurel équivalent, un espace vertical est défini entre les deux structures de support verticales.

2. Ensemble de construction amovible selon la revendication 1, l'élément de plancher comprenant en outre un élément chauffant (612) ou un élément de refroidissement (614) ou un élément chauffant et un élément de refroidissement avec une couche isolante entre eux, dans lequel l'élément chauffant est positionné à proximité de ou intégré dans la plaque supérieure et/ou l'élément de refroidissement est positionné à proximité de ou intégré dans la plaque inférieure.

3. Ensemble de construction amovible selon la revendication 2, dans lequel l'élément chauffant et/ou de refroidissement comprend un canal de fluide pour un milieu de transfert de chaleur, le canal de fluide étant prévu avec des moyens de couplage de canal de fluide (702, 704, 706, 708, 710, 712, 714, 716).

4. Ensemble de construction amovible selon la revendication 1, 2 ou 3, dans lequel la plaque supérieure et/ou la plaque inférieure comprend du béton.

5. Ensemble de construction amovible selon une ou plusieurs des revendications 1 à 4, dans lequel la largeur ou la longueur de l'une des plaques est supérieure à la largeur ou à la longueur respective de l'autre plaque.

6. Ensemble de construction amovible selon une ou plusieurs des revendications 1 à 5, dans lequel la structure porteuse est formée par des barres métalliques de renforcement (114, 116 ; 214, 216) s'étendant à partir de la plaque supérieure et/ou de la plaque inférieure.

7. Ensemble de construction amovible selon une ou plusieurs des revendications 1 à 6, dans lequel l'élément de plancher comprend un oeillet de levage (836).

8. Ensemble de construction amovible selon une ou plusieurs des revendications 1 à 7, dans lequel les premiers moyens de couplage comprennent un profilé métallique dans la plaque supérieure et/ou la plaque inférieure, pouvant être raccordé à un profilé métallique correspondant du second élément de plancher.

9. Ensemble de construction amovible selon une ou plusieurs des revendications 1 à 8, comprenant un chevêtre (506) entre la plaque supérieure et la plaque inférieure.

10. Ensemble de construction amovible selon une ou plusieurs des revendications 1 à 9, comprenant un profilé (918) pour recevoir et supporter les éléments de plancher (912).

11. Ensemble de construction amovible selon une ou plusieurs des revendications 1 à 10, comprenant au moins deux éléments de plancher et au moins un panneau de recouvrement (118 ; 218), dans lequel les éléments de plancher sont couplés en utilisant les premiers moyens de couplage et le au moins un panneau de recouvrement est positionné entre les deux éléments de plancher.

12. Ensemble de construction amovible selon une ou plusieurs des revendications 1 à 11, dans lequel les seconds moyens de couplage comprennent une plaque de distribution de pression (1118) qui comprend un plastique à haute densité.

13. Ensemble de construction amovible selon une ou plusieurs des revendications 1 à 12, dans lequel les seconds moyens de couplage de l'élément structurel détachable comprennent un goujon et un trou.

14. Ensemble de construction amovible selon une ou plusieurs des revendications 1 à 13, dans lequel l'élément structurel détachable est un portique (902 ; 816, 818, 834) comprenant deux colonnes (1002) ayant une section transversale en forme de L et raccordées par une barre supérieure.

15. Procédé pour construire un ensemble de construction amovible selon une ou plusieurs des revendications 1 à 14, comprenant les étapes consistant à _{:}
prévoir l'élément de plancher détachable et l'élément structurel détachable ;
placer les éléments de plancher sur les éléments structurels de sorte que la surface de contact de chaque élément de plancher repose sur la surface de support d'au moins un élément structurel ; et
coupler les éléments de plancher en utilisant les premiers moyens de couplage.
